(19) Europäisches Patentamt / European Patent Office / Office européen des brevets

(11) **EP 3 397 944 B1**

(12) **FASCICULE DE BREVET EUROPEEN**

(45) Date de publication et mention
de la délivrance du brevet:
**16.08.2023   Bulletin 2023/33**

(21) Numéro de dépôt: **16829293.6**

(22) Date de dépôt: **27.12.2016**

(51) Classification Internationale des Brevets (IPC):
**G01N 15/14** *(2006.01)*        **G02B 21/26** *(2006.01)*
**G01N 21/45** *(2006.01)*        **G01N 21/47** *(2006.01)*
**G03H 1/04** *(2006.01)*

(52) Classification Coopérative des Brevets (CPC):
**G01N 15/1434; G01N 15/147; G01N 21/453;**
**G02B 21/26; G03H 1/0443; G03H 1/0465;**
G01N 21/4788; G01N 2015/1445; G01N 2021/1738;
G01N 2201/024; G03H 2001/005; G03H 2001/0447;
G03H 2001/0452; G03H 2222/53; G03H 2227/03

(86) Numéro de dépôt international:
**PCT/FR2016/053674**

(87) Numéro de publication internationale:
**WO 2017/115048 (06.07.2017 Gazette 2017/27)**

(54) **DISPOSITIF ET PROCÉDÉ D'OBSERVATION BIMODALE D'UN OBJET**

VORRICHTUNG UND VERFAHREN ZUR BIMODALEN BEOBACHTUNG EINES OBJEKTS

DEVICE AND METHOD FOR BIMODAL OBSERVATION OF AN OBJECT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:   **28.12.2015   FR 1563392**

(43) Date de publication de la demande:
**07.11.2018   Bulletin 2018/45**

(73) Titulaires:
• **Commissariat à l'énergie atomique
et aux énergies alternatives
75015 Paris (FR)**
• **Biomérieux
69280 Marcy-L'Etoile (FR)**

(72) Inventeurs:
• **PERRAUT, François
38134 Saint Joseph de Riviere (FR)**
• **JOSSO, Quentin
69007 Lyon (FR)**

(74) Mandataire: **INNOV-GROUP
310, avenue Berthelot
69372 Lyon Cedex 08 (FR)**

(56) Documents cités:
WO-A1-2015/004968      US-A1- 2012 148 141
US-B1- 6 219 181

• **GABRIEL BIENER ET AL: "Combined reflection
and transmission microscope for telemedicine
applications in field settings", LAB ON A CHIP:
MINIATURISATION FOR CHEMISTRY, PHYSICS,
BIOLOGY, MATERIALS SCIENCE AND
BIOENGINEERING, vol. 11, no. 16, 27 juin 2011
(2011-06-27), page 2738, XP055299022, GB ISSN:
1473-0197, DOI: 10.1039/c1lc20169g**

**Description**

## DOMAINE TECHNIQUE

Le domaine technique de l'invention est l'imagerie holographique en ligne avec un mode d'imagerie sans lentille, technique permettant d'observer un objet placé face à un capteur d'image, sans optique de grandissement interposée entre l'objet et le capteur et un mode avec lentille, les deux modes étant superposés. L'objet peut notamment être un échantillon biologique.

## ART ANTERIEUR

L'observation d'objets, par exemple des échantillons biologiques, par imagerie sans lentille connaît un développement important depuis ces dix dernières années. Cette technique permet d'observer un objet en le disposant entre une source de lumière et un capteur d'image matriciel, sans disposer de lentille de grandissement optique entre l'objet et le capteur d'image. Ainsi, le capteur d'image collecte une image d'une onde lumineuse transmise par l'objet.

Cette image est formée de figures d'interférence entre une onde lumineuse émise par la source de lumière puis transmise par l'échantillon, et des ondes de diffraction, résultant de la diffraction par l'échantillon de l'onde lumineuse émise par la source. Ces figures d'interférences sont parfois dénommées figures de diffraction, ou désignées par le terme anglais « diffraction pattern ».

La publication Repetto L., «Lensless digital holographie microscope with light-emitting diode illumination », Optics Letters, May 2004, décrit un dispositif comportant un objet disposé entre un capteur d'image, de type CCD, et une source de lumière, en l'occurrence une diode électroluminescente. Aucune optique de grandissement n'est disposée entre l'objet et le capteur d'image. Dans l'exemple décrit dans cette publication, l'objet comprend des billes de Latex. Sous l'effet de l'éclairement par la source de lumière, chaque bille produit, sur l'image formée par le capteur d'image, une figure de diffraction.

Le document WO2008090330 décrit un dispositif permettant l'observation d'échantillons biologiques, en l'occurrence des cellules, par imagerie sans lentille. Le dispositif permet d'associer, à chaque cellule, une figure d'interférence dont la morphologie permet d'identifier le type de cellule. L'imagerie sans lentille apparaît alors comme une alternative simple, et peu onéreuse, à un microscope classique. De plus, elle permet d'obtenir un champ d'observation nettement plus important que ne peut l'être celui d'un microscope. On comprend alors que les perspectives d'application liées à cette technologie soient importantes.

Le document US2012/0218379, postérieur au document précédent, reprend l'essentiel des enseignements de WO2008090330, et présente une façon particulière d'effectuer une reconstruction numérique, ou reconstruction holographique. D'une façon générale, l'image formée sur le capteur d'images, comportant des figures d'interférence, peut être traitée par un algorithme de propagation numérique, de manière à estimer des propriétés optiques de l'échantillon. De tels algorithmes sont bien connus dans le domaine de la reconstruction holographique. Pour cela, la distance entre l'échantillon et le capteur d'images étant connue, on applique un algorithme de propagation, prenant en compte cette distance, ainsi que la longueur d'onde de l'onde lumineuse émise par la source de lumière. On peut alors reconstituer une image d'une propriété optique de l'échantillon. Un algorithme de reconstruction numérique est par exemple décrit dans US2012/0218379. La demande de brevet US2012/0148141 décrit un dispositif d'imagerie sans lentille mettant en oeuvre les principes détaillés dans US2012/0218379, en les appliquant à la reconstruction de trajectoires de spermatozoïdes.

Le brevet US6219181 décrit un microscope permettant l'observation d'un échantillon en utilisant soit un système optique de fort grandissement, soit un système optique de faible grandissement. L'échantillon peut être maintenu selon une même position, le dispositif étant agencé pour effectuer une image de l'échantillon en utilisant l'un desdits systèmes optiques. Selon une autre possibilité, l'échantillon peut être déplacé entre deux positions, chaque position définissant un chemin optique, le déplacement s'effectuant perpendiculairement au chemin optique défini par chaque position. Chaque position est alors associée à un capteur d'image, ce qui impose l'utilisation de deux capteurs d'image.

Les inventeurs ont cherché à perfectionner cette technologie, en proposant un dispositif permettant d'observer un échantillon selon une modalité d'imagerie sans lentille, donc sans optique de grandissement, mais également selon une modalité d'imagerie classique.

## EXPOSE DE L'INVENTION

Un objet de l'invention est un dispositif d'observation d'un objet, comportant :

- une source de lumière et un capteur d'image, ladite source de lumière étant apte à émettre une onde lumineuse, dite onde d'émission, selon un axe d'émission, l'onde lumineuse se propageant, selon un trajet optique, jusqu'au capteur d'image à travers ledit objet ;

- un système optique disposé, selon ledit trajet optique, entre ladite source de lumière et le capteur d'image ;

caractérisé en ce que le dispositif comporte également :

- un support, apte à maintenir l'objet, définissant une première position et une deuxième position, chaque position étant apte à recevoir ledit objet, le support étant configuré de telle sorte que,

  ▪ ladite première position est interposée, selon ledit trajet optique, entre ladite source de lumière et le système optique, de telle sorte que ce dernier est configuré pour conjuguer ledit capteur d'image à ladite première position ;
  ▪ la deuxième position est interposée, selon ledit trajet optique, entre ledit système optique et ledit capteur d'image, de telle sorte qu'il n'y ait aucune optique de grandissement entre ladite deuxième position et le capteur d'image.

Par conjuguer ledit capteur d'image à ladite première position, on entend que le capteur d'image est apte à conjuguer le capteur d'image à un objet placé selon ladite première position, c'est-à-dire former une image nette d'un objet disposé à ladite première position.

Selon un mode de réalisation, ledit trajet optique s'étend parallèlement audit axe d'émission, de telle sorte que la source de lumière, le système optique et le capteur d'image sont alignés selon ledit axe d'émission, le support étant configuré de telle sorte que lesdites première position et deuxième position sont alignées selon ledit axe d'émission. Le support peut être mobile en translation selon une direction perpendiculaire à l'axe d'émission.

Selon un mode de réalisation, le dispositif comporte un premier miroir, disposé, le long dudit trajet optique, entre la source de lumière et le capteur d'image. Ce premier miroir peut notamment s'étendre entre lesdites première et deuxième positions et étant configuré pour réfléchir une onde lumineuse se propageant depuis ladite première position vers ladite deuxième position. Le dispositif peut alors comporter un deuxième miroir, disposé entre la première et la deuxième position, l'ensemble formé par lesdits premier et deuxième miroirs étant configuré pour réfléchir une onde lumineuse se propageant depuis ladite première position selon un axe parallèle à l'axe d'émission, lesdites première et deuxième positions étant décalées selon un axe perpendiculaire audit axe d'émission. Les première et deuxième positions peuvent être alignées selon un axe, dit axe de décalage, perpendiculaire audit axe d'émission.

Le support peut comporter un mécanisme de déplacement apte à déplacer ledit objet entre lesdites première et deuxième positions. Ce mécanisme peut être apte à translater ledit objet entre lesdites première et deuxième positions, selon ledit axe de décalage.

Un autre objet de l'invention est un procédé d'observation d'un objet à l'aide d'un dispositif tel que précédemment décrit, dans lequel la source de lumière émet l'onde d'émission étant selon une longueur d'onde, l'objet étant transparent ou translucide à ladite longueur d'onde, le procédé comportant :

a) le positionnement de l'objet selon ladite première position, de façon à obtenir une première image de l'objet à l'aide du capteur d'image, l'objet étant conjugué au capteur d'image par ledit système optique, ladite première image étant formée selon une première modalité dite d'imagerie conventionnelle ;
et/ou
b) le positionnement de l'objet selon ladite deuxième position, de façon à obtenir une deuxième image de l'objet à l'aide du capteur d'image selon une deuxième modalité dite d'imagerie sans lentille.

Selon un mode de réalisation, les étapes a) et b) sont réalisées successivement, et :

- la première image définit un premier champ d'observation de l'objet ;
- la deuxième image définit un deuxième champ d'observation de l'objet ;

ledit deuxième champ d'observation étant plus large que ledit premier champ d'observation. Le procédé peut alors comporter, suite à l'étape b), une étape b') de reconstruction numérique comprenant l'application, à ladite deuxième image, d'un opérateur de propagation, prenant en compte une distance entre ladite deuxième position et le capteur d'image, de façon à obtenir une image dite reconstruite de l'objet placé selon ladite deuxième position.

Selon un mode de réalisation, le procédé comporte :

- ladite étape a), l'objet positionné selon la première position formant un premier objet ;
- une étape c), dans laquelle on dispose un deuxième objet selon ladite deuxième position ;

de façon à former simultanément, sur le capteur d'image, une image, dite image duale, représentant ledit premier objet et ledit deuxième objet. Le procédé peut alors comporter une étape d) de reconstruction numérique comprenant l'application, à ladite image duale, d'un opérateur de propagation, de façon à obtenir une image duale reconstruite :

- dans un plan s'étendant selon la première position, auquel cas l'image duale ainsi reconstruite correspond à une image du premier objet ;
  et/ou
- dans un plan s'étendant selon la deuxième position, auquel cas l'image duale reconstruite correspond à une image du deuxième objet.

Le procédé peut également comporter une étape e) de sélection de pixels représentatifs dans chaque image reconstruite, en fonction de leur intensité respective, de façon à former une image de l'objet à partir des pixels ainsi sélectionnés. Tout ou partie des pixels non sélectionnés ne sont pas pris en compte dans ladite image de l'objet. Cette sélection peut comporter les sous-étapes suivantes :

i) calcul, pour chaque pixel de l'image reconstruite, d'un indicateur représentant une dispersion de l'intensité de pixels adjacents autour dudit pixel ;
ii) comparaison de l'indicateur calculé pour chaque pixel à un seuil ;
iii) sélection des pixels représentatifs sur la base de la comparaison réalisée à la sous-étape ii).

Par dispersion, on entend une comparaison de l'intensité du pixel et de pixels voisins dudit pixel avec une intensité moyenne dudit pixel et desdits pixels voisins. Les pixels voisins peuvent être choisis dans une zone d'intérêt comprenant ledit pixel. De préférence, ladite zone d'intérêt est centrée sur ledit pixel.
La sélection peut être réalisée en ne considérant que les pixels pour lesquels l'indicateur de dispersion est élevé.
L'indicateur de dispersion peut également correspondre à l'intensité d'un pixel, les pixels sélectionnés étant ceux pour lesquels l'intensité dépasse un seuil prédéterminé dans l'image reconstruite.
L'objet peut s'étendre selon la première position et selon la deuxième position, de telle sorte que :

- la première image définit un premier champ d'observation de l'objet ;
- la deuxième image définit un deuxième champ d'observation de l'objet ;

ledit deuxième champ d'observation étant plus large que ledit premier champ d'observation. L'objet peut être un canal fluidique, comportant des particules disposées dans ou à la surface d'un fluide.
Un autre objet de l'invention est un procédé d'observation d'un premier objet et d'un deuxième objet, comportant les étapes suivantes :

- disposition d'une source de lumière et d'un capteur d'image, de telle sorte la source de lumière émette une onde lumineuse, dite onde d'émission, se propageant vers le capteur d'image en définissant un trajet optique ;
- interposition d'un premier objet et d'un deuxième objet entre la source de lumière et le capteur d'image, lesdits premier et deuxième objets s'étendant transversalement audit trajet optique, de telle sorte que lesdits premier et deuxième objets sont disposés, selon ledit trajet optique, de part et d'autre d'un système optique, ledit système optique étant apte à conjuguer une partie du premier objet avec le capteur d'image ;
- obtention une image, dite image duale, sur le capteur d'image, à partir de l'onde d'émission se propageant, depuis la source de lumière, à travers lesdits premier et deuxième objets, jusqu'au capteur d'image.

Le procédé peut comporter l'application d'un opérateur de propagation numérique à ladite d'image duale, de façon à obtenir une image duale dite reconstruite à une distance, dite distance de reconstruction, du capteur.
Le procédé peut comporter une sélection, parmi lesdites images duales reconstruites,

- d'une image duale reconstruite représentative dudit deuxième objet, la distance de reconstruction étant la distance entre ledit deuxième objet et le capteur d'image ;
- et/ou d'une image duale reconstruite représentative dudit premier objet, la distance de reconstruction étant la distance entre ledit premier objet et le capteur d'image.

Le procédé peut comporter une étape de sélection de pixels représentatifs dans chaque image reconstruite, telle que préalablement décrite.
L'invention sera mieux comprise par les exemples de réalisation décrits ci-après, lesquels sont décrits en lien avec les figures suivantes.

## FIGURES

Les figures 1A et 1B représentent un dispositif selon un premier mode de réalisation de l'invention. Les figures 1C et 1D représentent des exemples d'objets aptes à être observés par un dispositif selon l'invention. La figure 1E représente une mise en oeuvre particulière du dispositif représenté sur les figures 1A et 1B.

La figure 2A représente une image d'un objet, en l'occurrence une mire de résolution, obtenue à l'aide d'un dispositif selon l'invention, en étant positionnée dans une première position dudit dispositif.

La figure 2B représente une image d'un objet, en l'occurrence une mire graduée, obtenue l'aide d'un dispositif selon l'invention, en étant positionnée dans une deuxième position dudit dispositif.

La figure 2C représente une image obtenue en appliquant un algorithme de reconstruction numérique à l'image représentée sur la figure 2B.

La figure 2D représente un dispositif expérimental utilisé pour la réalisation d'essais décrits en lien avec les figures 2A à 2C, ainsi que 4A à 4C et 5A à 5C.

La figure 3 représente une variante du dispositif représenté sur les figures 1A, 1B et 1E.

La figure 4A représente une image dite duale, obtenue en mettant en oeuvre un dispositif tel que représenté sur la figure 1E ou 2D, permettant l'observation simultanée d'une mire, dite mire de phase, et d'une mire graduée. La figure 4B est une image de la mire de phase, obtenue en appliquant une reconstruction numérique à l'image duale représentée sur la figure 4A. La figure 4C représente une image de la mire graduée, obtenue en appliquant une reconstruction numérique à l'image duale représentée sur la figure 4A.

La figure 5A représente une image de la mire de phase, obtenue en appliquant une reconstruction numérique à l'image duale représentée sur la figure 4A, couplée à une étape de sélection de pixels. La figure 5B est une image de la mire graduée, obtenue en appliquant une reconstruction numérique à l'image duale représentée sur la figure 4A, couplée à une étape de sélection de pixels. La figure 5C représente une fusion des images 5A et 5B sur une même image.

Les figures 6A et 6B représentent un deuxième mode de réalisation d'un dispositif selon l'invention. La figure 6C représente une mise en oeuvre particulière de ce mode de réalisation.

## EXPOSE DE MODES DE REALISATION PARTICULIERS

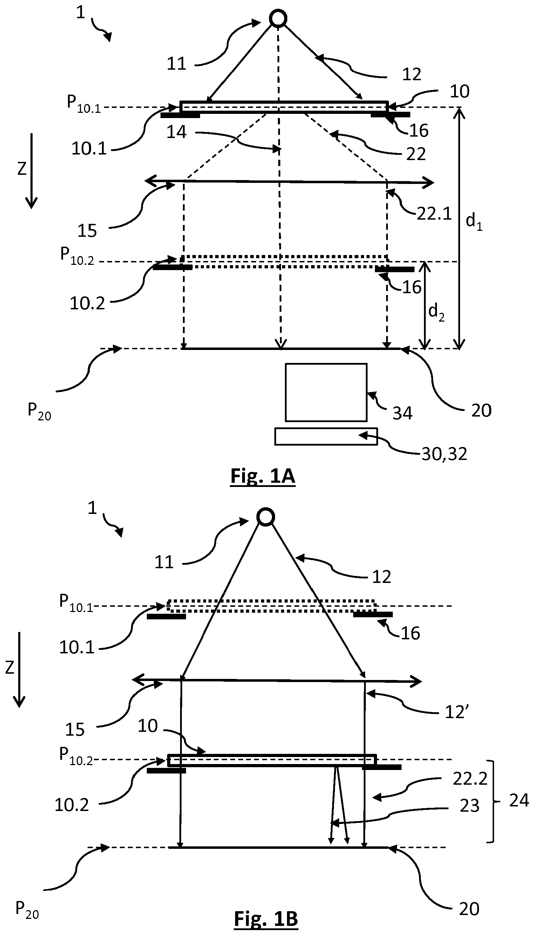

Les figures 1A et 1B représentent un premier mode de réalisation d'un dispositif selon l'invention. Une source de lumière 11 est apte à produire une onde lumineuse 12, dite onde lumineuse d'émission, se propageant en direction d'un capteur d'image 20, selon un axe d'émission Z. L'onde lumineuse 12 est émise selon au moins une longueur d'onde $\lambda$. La longueur d'onde peut par exemple être une longueur d'onde visible, c'est-à-dire comprise entre 400 nm et environ 700 nm. Le dispositif comporte un support 16 apte à maintenir un objet 10 que l'on souhaite observer. Le support permet de disposer l'objet 10 de telle sorte que cet objet soit positionné selon une première position 10.1, dans laquelle l'objet s'étend selon un premier plan objet $P_{10.1}$, ou dans une deuxième position 10.2, dans laquelle l'objet s'étend selon un deuxième plan objet $P_{10.2}$. Ces deux plans s'étendent préférentiellement parallèlement l'un à l'autre.

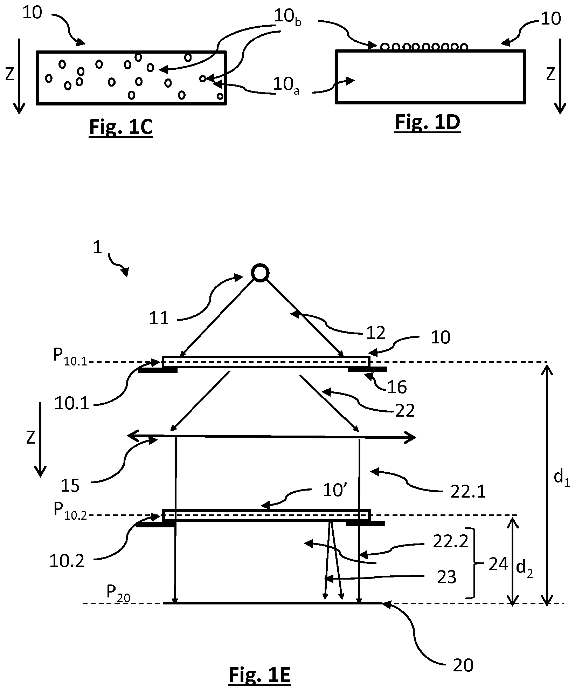

L'objet 10 peut être un échantillon que l'on souhaite caractériser. Il peut comprendre un milieu $10_a$, solide ou liquide, transparent ou translucide à ladite longueur d'onde $\lambda$, dans lequel, où à la surface duquel, sont dispersées des particules $10_b$. Par translucide, on entend que l'objet transmet tout ou partie d'une onde lumineuse qui lui est incidente. Les figures 1C et 1D représentent des exemples de tels objets. Les particules $10_b$ peuvent être des particules biologiques. Le milieu $10_a$ peut être un milieu de culture ou un liquide corporel. Par particule biologique, on entend une cellule, telle une cellule eucaryote, une bactérie ou autre microorganisme, un champignon, une spore, un virus...Le terme particules peut également désigner des microbilles, par exemple des microbilles métalliques, des microbilles de verre ou des microbilles organiques, couramment mises en oeuvre dans des protocoles biologiques. Il peut également s'agir de gouttelettes insolubles baignant dans un milieu liquide, par exemple des gouttelettes lipidiques dans une émulsion de type huile dans eau. Ainsi, le terme particule désigne à la fois des particules endogènes, initialement présentes dans l'objet examiné, et des particules exogènes, ajoutées à cet objet avant son observation. Ce terme peut également désigner des particules issues de l'agrégation d'autres particules présentes dans l'échantillon, par exemple un complexe formé par des anticorps avec des éléments portant l'antigène recherché. D'une façon générale, chaque particule a une taille avantageusement inférieure à 1 mm, voire inférieure à 500 $\mu$m, et de préférence une taille comprise entre 0.5 $\mu$m et 500 $\mu$m. De préférence, chaque particule a une taille supérieure à la longueur d'onde $\lambda$ d'émission de la source de lumière, cela de manière à entraîner un phénomène de diffraction comme décrit ci-après. Par taille de particule, on entend le plus grand diamètre ou une diagonale.

Le terme liquide corporel désigne un liquide issu d'un corps humain ou animal, de type sang, urine, sueur, liquide céphalorachidien, lymphe... Le terme milieu de culture désigne un milieu propice au développement d'une espèce biologique de type cellule, bactéries ou autres microorganismes.

L'objet peut également être une lame de tissu, ou lame d'anatomo-pathologie, comportant une fine épaisseur de tissu déposée sur une lame transparente. Il peut également s'agir d'une lame issue de l'application d'un protocole de coloration adapté à la recherche d'un microorganisme dans un échantillon, par exemple une coloration Gram ou Giemsa. Par fine épaisseur, on entend une épaisseur de préférence inférieure à 100 $\mu$m, et de préférence inférieure à 10 $\mu$m, typiquement quelques micromètres.

La source de lumière peut être une diode électroluminescente ou une source de lumière laser, telle une diode laser. Elle est de préférence ponctuelle.

Le dispositif comporte également un capteur d'image 20, apte à former une image selon un plan de détection $P_{20}$. Dans l'exemple représenté, il s'agit d'un capteur d'image matriciel comportant une matrice de pixels, de type CCD ou un CMOS. Les CMOS sont les capteurs d'image préférés, car la taille des pixels est plus faible, ce qui permet d'acquérir des images dont la résolution spatiale est plus favorable. Les capteurs d'image dont le pas inter pixel est inférieur à 3 $\mu$m sont préférés, afin d'améliorer la résolution spatiale de l'image. Le plan de détection $P_{20}$ s'étend de préférence perpendiculairement à l'axe Z selon lequel l'onde lumineuse 12 est émise.

Le capteur d'image 20 est relié à une unité de traitement de l'information 30, par exemple un microprocesseur, et à un écran 34. Le microprocesseur est relié à une mémoire 32, comportant des instructions permettant notamment la mise en oeuvre d'algorithmes de reconstruction numérique décrits par la suite.

Le capteur d'image 20 peut comprendre un système de renvoi d'image de type miroir vers une matrice de pixels, auquel cas le plan de détection correspond au plan selon lequel s'étend le système de renvoi d'image. D'une façon générale, le plan de détection $P_{20}$ correspond au plan dans lequel une image est formée. De préférence, le plan de détection $P_{20}$ est parallèle aux plans $P_{10.1}$ et $P_{10.2}$ précédemment décrits.

Le dispositif comporte un système optique 15 apte à conjuguer un objet, positionné selon la première position 10.1, avec le capteur d'image 20. Autrement dit, le système optique 15 permet la formation d'une image nette de l'objet 10, positionné selon la position 10.1, sur le capteur d'image 20. Aussi, lorsque l'objet 10 est positionné selon la première position 10.1, comme représenté sur la figure 1A, le dispositif 1 permet la formation d'une première image $I_1$ selon une première modalité de type microscopie classique, l'image obtenue sur le capteur d'image 20 étant focalisée par le système optique 15, ce dernier permettant d'obtenir un facteur de grandissement transversal de préférence supérieur à 1, et encore de préférence supérieur à 10. Le terme grandissement transversal désigne un grandissement selon un plan perpendiculaire à l'axe de propagation de la lumière, en l'occurrence l'axe Z. Dans la suite du texte, on utilise indifféremment les termes grandissement transversal ou grandissement. Ainsi, selon cette première modalité, la première image $I_1$ obtenue sur le capteur 20 représente une observation de l'objet 10 selon un premier champ d'observation. De préférence, ce champ d'observation est peu étendu, au profit d'une résolution spatiale élevée, ce qui permet l'observation de détails de l'objet. La figure 1A représente l'onde lumineuse d'émission 12, se propageant jusqu'à l'objet 10 disposé dans la position 10.1, ce dernier transmettant une onde lumineuse 22 se propageant jusqu'au système optique 15, ce système optique formant alors une onde lumineuse 22.1 se propageant jusqu'au capteur d'image 20, sur lequel la première image $I_1$ est formée. Sur la figure 1A, la deuxième position 10.2 est représentée en pointillés, indiquant qu'il n'y a pas d'objet occupant cette position.

La deuxième position 10.2 se trouve en regard du capteur d'image 20, aucune optique de grandissement ou de formation d'image n'étant disposée entre cette position et le capteur d'image. Cela n'empêche pas la présence éventuelle de microlentilles de focalisation au niveau de chaque pixel du capteur d'image 20, ces dernières n'ayant pas de fonction de grandissement de l'image. Ainsi, lorsque l'objet 10 est disposé selon cette deuxième position 10.2, comme représenté sur la figure 1B, le capteur d'image 20 est apte à former une deuxième image $I_2$ de l'objet selon une deuxième modalité, dite d'imagerie sans lentille. Selon cette deuxième modalité, l'onde lumineuse 12 émise par la source de lumière 11 est transportée par le système optique 15, ce dernier formant une onde lumineuse 12', dite onde incidente, se propageant jusqu'à l'objet, de préférence sous la forme d'une onde plane. Une partie de l'onde 12' est alors transmise par l'objet, formant une onde transmise 22.2, et se propage jusqu'au capteur d'image 20. Par ailleurs, sous l'effet de l'exposition à l'onde incidente 12', l'objet peut générer une onde de diffraction 23 résultant de la diffraction, par l'objet, de l'onde incidente 12'. Le capteur d'image 20 est donc exposé à une onde, dite onde d'exposition 24, comprenant l'onde transmise 22.2 ainsi que l'onde de diffraction 23. La détection de l'onde d'exposition 24 par le capteur d'image permet la formation d'une deuxième image $I_2$, définissant un deuxième champ d'observation sur l'objet. Cette deuxième image $I_2$ représente une distribution spatiale de l'amplitude de l'onde d'exposition 24 dans le plan de détection $P_{20}$. Elle peut notamment comporter des figures de diffraction résultant de l'interférence entre l'onde transmise 22.2 et l'onde de diffraction 23. Ces figures peuvent prendre la forme d'un noyau central, autour duquel s'étendent des anneaux concentriques. Il s'agit des figures de diffraction décrites dans la partie relative à l'art antérieur. Lorsque l'objet comporte différentes particules $10_b$, l'onde de diffraction 23 comporte une pluralité d'ondes de diffractions élémentaires, chaque onde de diffraction élémentaire résultant de la diffraction de l'onde incidente 12' par lesdites particules. L'apparition de ces ondes de diffraction est favorisée lorsque la taille desdites particules est de l'ordre de ou supérieure à la longueur d'onde $\lambda$ émise par la source de lumière 11. Sur la figure 1B, la première position 10.1 est représentée en pointillés, indiquant qu'il n'y a pas d'objet occupant cette position.

Ainsi, le support 16 permet de maintenir un objet dans la première position 10.1 (figure 1A), entre la source de lumière 11 et le système optique 15, ou dans la deuxième position 10.2 (figure 1B), entre ledit système optique 15 et le capteur d'image 20. Le système optique 15 est disposé entre la première position 10.1 et la deuxième position 10.2. Dans cet exemple, la source de lumière 11, la première position 10.1, le système optique 15, la deuxième position 10.2 et le capteur d'image 20 sont alignés, selon cet ordre, selon l'axe d'émission Z. Du fait de cet alignement, l'axe d'émission Z correspond également à un axe de propagation de la lumière entre la source de lumière 11 et le capteur d'image 20. L'onde lumineuse émise par la source de lumière 11 suit ainsi un trajet optique linéaire 14 jusqu'au capteur d'image 20, à travers la première position 10.1, le système optique 15 et la deuxième position 10.2. Dans les exemples représentés sur les figures 1A et 1B, ce trajet optique 14 s'étend parallèlement à l'axe Z selon laquelle l'onde lumineuse 12 est émise. Dans d'autres modes de réalisation, abordés dans la suite de la description, ce trajet optique peut ne pas être linéaire. D'une façon générale, la première position 10.1 et la deuxième position 10.2 s'étendent, selon ledit trajet optique 14, respectivement à une première distance $d_1$ et à une deuxième distance $d_2$ du capteur d'image 20, $d_1$ étant supérieure à $d_2$.

Selon la deuxième modalité d'imagerie, du fait de l'absence d'optique de grandissement entre le capteur d'image 20 et la deuxième position, la deuxième image $I_2$ obtenue sur le capteur d'image 20 représente une observation de l'objet 10 selon un deuxième champ d'observation de préférence plus élevé que le premier champ d'observation.

La deuxième image $I_2$ obtenue sur le capteur d'image 20 peut être exploitée telle qu'elle. En effet, il est connu que certaines particules produisent des figures de diffraction dont la morphologie leur est spécifique. Il est ainsi possible de dénombrer ces particules, voire de les identifier. Cela est par exemple décrit dans le document WO2008090330, cité en référence à l'art antérieur. Ainsi, un utilisateur peut réaliser une observation de l'objet selon cette deuxième modalité, de façon à obtenir une observation selon un large champ d'observation. Il peut alors cibler certaines zones d'intérêt de l'objet, et en obtenir une image plus détaillée, selon un champ d'observation plus étroit, en plaçant l'objet selon la première position 10.1. Le dispositif permet alors d'alterner entre une observation d'un détail de l'objet selon un champ d'observation étroit, à travers le système optique 15, grâce à la première modalité, et une observation de l'objet selon un large champ d'observation, grâce à la deuxième modalité.

Selon une variante, à l'image $I_2$ obtenue selon la deuxième modalité, on peut appliquer un algorithme de reconstruction, de façon à obtenir une image reconstruite dans un plan parallèle au plan de détection $P_{20}$, dit plan de reconstruction $P_z$, placé à une distance connue $d_r$, dite distance de reconstruction, du plan de détection $P_{20}$, selon l'axe de propagation Z. Il s'agit alors d'appliquer les principes de la reconstruction holographique numérique, décrits par exemple dans la publication Ryle et al, « Digital in-line holography of biological specimens », Proc. Of SPIE Vol.6311 (2006), en effectuant un produit de convolution entre la deuxième image $I_2$ et un opérateur de propagation $h(x, y, z)$. L'opérateur de propagation $h(x, y, z)$ a pour fonction de décrire la propagation de la lumière entre le capteur d'image 20 et un point de coordonnées $(x, y, z)$. Les coordonnées $(x, y)$ désignent des coordonnées des pixels selon le plan de détection $P_{20}$, tandis que la coordonnée z désigne une coordonnée selon l'axe de propagation Z. Le produit de convolution de l'image par l'opérateur de propagation permet de reconstruire une expression complexe $I_{2,z}(x, y)$, de l'onde d'exposition 24 en tout point de coordonnées $(x, y, z)$ de l'espace, et en particulier dans un plan situé à une distance de reconstruction $d_r$ du capteur d'image, ayant pour équation $z = d_r$. On obtient alors une image reconstruite $I_{2,z=dr}$. On peut alors déterminer l'amplitude $u(x, y, z)$ et la phase $\varphi(x, y, z)$ de l'onde d'exposition 24 à la distance de reconstruction $d_r$, avec :

$$u(x, y, z = d_r) = \text{abs}\,[I_{2,z=dr}(x, y)]\,;$$

$$\varphi(x, y, z = d_r) = \text{arg}\,[I_{2,z=dr}(x, y)].$$

Les opérateurs abs et arg désignent respectivement le module et l'argument.

Dans cet exemple, le plan de détection $P_{20}$ est affecté d'une coordonnée $z = 0$. L'opérateur de propagation peut être tel que :

$$h(x, y, z) = \frac{z}{2\pi r}\left(1 - j2\pi\frac{r}{\lambda}\right)\frac{e^{(j2\pi\frac{r}{\lambda})}}{r^2}$$

, avec $r = \sqrt{x^2 + y^2 + z^2}$, et $\lambda$ désignant la longueur d'onde.

Un tel opérateur a été décrit dans la publication Marathay, A « On the usual approximation used in the Rayleigh-Sommerfeld diffraction theory », J. Opt. Soc. Am. A, Vol. 21, N° 4, April 2004 D'autres opérateurs de propagation sont utilisables, par exemple un opérateur basé sur la fonction de Fresnel-Helmholtz, telle que :

$$h(x, y, z) = \frac{1}{j\lambda z}e^{j2\pi\frac{z}{\lambda}}\exp(j\pi\frac{(x+y)^2}{\lambda z})$$

.

Lorsque la reconstruction s'effectue selon le sens la propagation de la lumière, par exemple d'un plan objet

$P_{10\text{-}1}$ ou $P_{10\text{-}2}$ vers le plan de détection $P_{20}$, on parle de propagation. Lorsque la reconstruction s'effectue selon le sens inverse de la propagation de la lumière, par exemple du de détection $P_{20}$ vers un plan situé entre la source de lumière ledit plan de détection, et par exemple un plan objet $P_{10\text{-}1}$ ou $P_{10\text{-}2}$, on parle de rétro-propagation. Dans la suite du texte, on considère que l'axe de propagation de la lumière est orienté de la source de lumière 11 vers le capteur d'image 20, et que la coordonnée z = 0 correspond au plan de détection $P_{20}$ selon lequel s'étend le capteur d'image 20.

Comme précédemment décrit, le dispositif représenté sur la figure 1 permet de placer un même objet 10 alternativement selon la première position 10.1 et selon la deuxième position 10.2, ce qui permet une observation bimodale de cet objet.

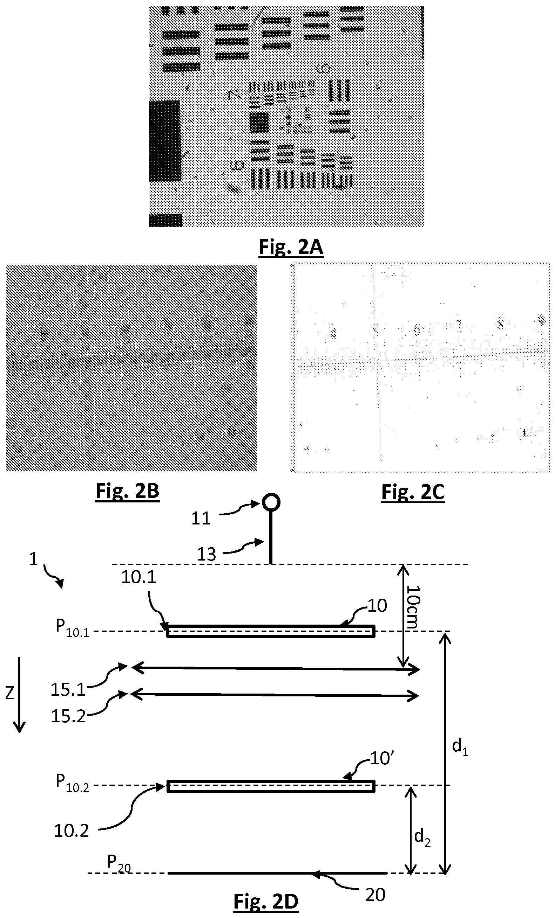

Les figures 2A, 2B et 2C correspondent à des images réalisées avec un dispositif expérimental tel que représenté sur la figure 2D. Dans ce dispositif, la source de lumière 11 est une diode électroluminescente, commercialisée par Innovation Optics sous la référence Lumibright 1700A-100-A-C0, dont la bande spectrale d'émission est centrée sur la longueur d'onde λ = 450 nm. Cette diode électroluminescente est placée face à une première extrémité d'une fibre optique 13, dont la deuxième extrémité est placée face à l'objet. Le diamètre du coeur de la fibre optique est de 1 mm. Selon une variante, la fibre optique 13 peut être remplacée par un diaphragme, dont l'ouverture est typiquement comprise entre 5 μm et 1mm, de préférence entre 50 μm et 500 μm, par exemple 150 μm. La fibre optique ou le diaphragme constituent un filtre spatial 13 permettant de former une source de lumière ponctuelle lorsque la source de lumière 11 n'est pas jugée suffisamment ponctuelle.

Le capteur d'image 20 est un capteur CMOS commercialisé par Aptina sous la référence Micron MT9P031. Il s'agit d'un capteur CMOS monochrome, comprenant 2592 × 1944 pixels de 2.2 μm de côté, formant une surface de détection dont l'aire s'élève à 24.4 $mm^2$.

Le système optique 15 comprend un objectif 15.1, de marque Motic, de référence EF-N Plan 40X, d'ouverture numérique 0.65, et de distance focale $f_1$ = 4.6 mm. Cet objectif est disposé à une distance égale à 10 cm de l'extrémité distale de la fibre optique 13. Il est disposé à une distance de 300 μm environ de la première position 10.1 du dispositif, et est placé au contact d'une lentille de tube 15.2, (référence AC254-050-A, fabricant Thorlabs) de diamètre 25 mm et de distance focale 50 mm. Le capteur d'image est placé à une distance de 43.7 mm de la lentille de tube 15.2. La première position et la deuxième position s'étendent respectivement à une distance $d_1$ = 26.2 mm et $d_2$ = 15.3 mm du capteur d'image 20. Ce système optique permet de former, sur le capteur d'image, une première image $I_1$ d'un objet 10, placé selon la première position 10.1, affectée d'un facteur de grandissement égal au rapport des distances focales, c'est-à-dire voisin de 10.8.

La figure 2A représente une première image $I_1$ d'une mire de résolution de type USAF 1951, placée selon la première position 10.1, la deuxième position 10.2 étant laissée libre. La figure 2B représente une deuxième image $I_2$ d'une mire transparente, présentant des graduations opaques, placée selon la deuxième position 10.2, la première position 10.1 étant laissée libre. La deuxième image $I_2$ a fait l'objet d'une reconstruction numérique, visant à convoluer cette image par un opérateur de propagation $h(x, y, z)$, comme précédemment décrit, z étant égal à $-d_2$, ce qui correspond au deuxième plan objet $P_{10.2}$. On obtient une image dite reconstruite, à la position $d_2$, notée $I_{2z=-d2}$, représentative de l'objet placé dans la deuxième position, c'est-à-dire la mire graduée, cette image reconstruite étant représentée à la figure 2C. Dans cet exemple, l'opérateur de propagation $h(x, y, z)$ mis en oeuvre est :

$$h(x,y,z) = \frac{z}{2\pi r}\left(1 - j2\pi\frac{r}{\lambda}\right)\frac{\mathrm{e}^{(j2\pi\frac{r}{\lambda})}}{r^2}, \text{ avec } r = \sqrt{x^2 + y^2 + z^2}.$$

L'image reconstruite $I_{2\,z=-d2}$ correspond bien à la mire graduée. On remarque que la deuxième position 10.2 permet d'obtenir une image dont le champ d'observation est voisin de 6.1 mm × 4.6 mm, à comparer au champ d'observation obtenu lorsque l'objet est placé selon la première position 10.1, ce champ d'observation s'étendant selon 528 μm × 396 μm.

Dans l'essai qui précède, on a disposé successivement un premier objet, en l'occurrence la mire USAF 1951, à la première position 10.1, puis un deuxième objet, en l'occurrence la mire graduée, à la deuxième position 10.2.

De façon alternative, comme représenté sur la figure 1E, le dispositif expérimental schématisé sur la figure 2D permet de placer simultanément un objet, dit premier objet 10 selon la première position 10.1 et un autre objet, dit objet auxiliaire 10', ou deuxième objet, selon la deuxième position 10.2. Le premier objet 10, placé selon la première position 10.1, transmet une onde 22 sous l'effet de son éclairement par l'onde 12 émise par la source de lumière 11. L'onde 22 transmise par l'objet est transportée par le système optique 15, pour former une onde 22.1, cette dernière se propageant jusqu'au deuxième objet 10' placé selon la deuxième position 10.2, et forme alors une onde incidente au deuxième objet 10'. Une partie 22.2 de cette onde est transmise par le deuxième objet 10' et se propage jusqu'au capteur d'image 20. Par ailleurs, sous l'effet de son éclairement par l'onde incidente 22.1, le deuxième objet 10' produit une onde de diffraction 23, laquelle se propage jusqu'au capteur d'image 20. Ainsi, le capteur d'image 20 est exposé à une onde 24, dite onde d'exposition du capteur, formée par :

- l'onde 22.2 transmise par le deuxième objet 10', placé selon la deuxième position, et en partie représentative du premier l'objet 10, placé selon la première position ;
- l'onde de diffraction 23 formée par le deuxième objet 10', laquelle forme des interférences avec l'onde 22.2 transmise par cet objet.

Le capteur d'image 20 forme alors une dite image duale $I_3$, représentant une distribution spatiale de l'intensité de l'onde d'exposition 24 selon le plan de détection $P_{20}$. Cette image duale $I_3$ est représentative du premier l'objet 10 et du deuxième objet 10'. Il est alors nécessaire de distinguer, dans ladite image duale $I_3$, une contribution $I_{3-1}$, correspondant à une image de l'objet 10 et une contribution $I_{3-2}$, correspondant à une image du deuxième objet 10'.

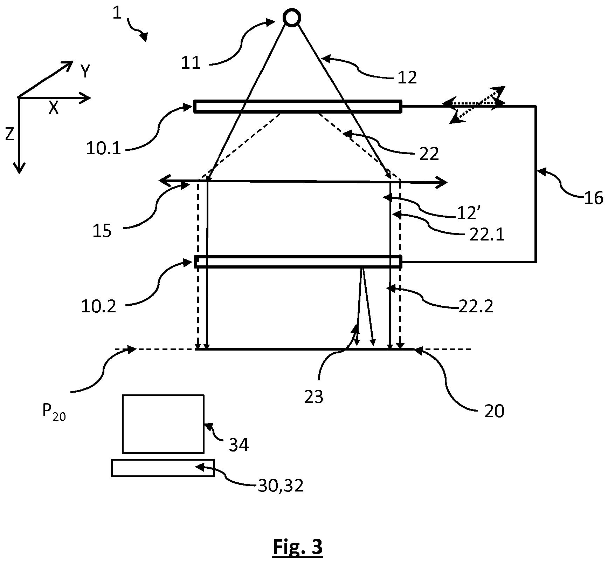

Selon un mode de réalisation, représenté sur la figure 3, le support 16 permet une translation simultanée du premier objet 10 placé selon la première position 10.1 et du deuxième objet 10' placé selon la deuxième position 10.2, cette translation étant effectuée selon un plan XY perpendiculaire à l'axe Z de propagation de la lumière. La contribution $I_{3-1}$ du premier l'objet 10 se déplace alors davantage que la contribution $I_{3-2}$ du deuxième objet 10' et dans un sens inverse. Cette différence de déplacements permet de distinguer les deux contributions l'une par rapport à l'autre. Cette discrimination peut alors être réalisée visuellement, par l'écran 34. Elle peut également être réalisée par l'unité de traitement d'information 30, moyennant un la mise en oeuvre d'un algorithme de traitement d'images adapté, pouvant être stocké dans la mémoire 32.

Ce même effet peut être obtenu en utilisant le dispositif représenté sur la figure 1E, en modifiant l'inclinaison de l'axe d'émission de la lumière Z entre deux images formées successivement sur le capteur d'image. La contribution $I_{3-1}$ du premier objet 10 se déplace alors davantage que la contribution $I_{3-2}$ du deuxième objet 10' et dans un sens inverse. Cette différence de déplacements permet de distinguer les deux contributions l'une par rapport à l'autre.

Selon un autre mode de réalisation, l'image duale $I_3$ fait l'objet d'un algorithme de reconstruction numérique, permettant de distinguer les contributions respectives du premier objet 10 et du deuxième objet 10' en fonction de leurs distances $d_1$, $d_2$ par rapport au capteur d'image 20, selon le trajet optique 14.

Ainsi, après obtention d'une image duale $I_3$, cette dernière fait l'objet d'une convolution par un opérateur de propagation $h(x, y, z)$, la coordonnée z correspondant soit à la distance $d_1$ (z = $\pm d_1$), soit à la distance $d_2$ (z = $\pm d_2$). L'indication z = $\pm d_1$ correspond au fait que la propagation peut se faire selon le sens de l'axe de propagation Z, ou dans un sens opposé, ce dernier cas correspondant à une rétro-propagation. Dans les exemples qui suivent, on effectue des rétro-propagation (z < 0), sachant qu'une propagation selon des valeurs positives de z serait également envisageable. La coordonnée z = 0 correspond au plan de détection $P_{20}$. Les rétro-propagations de l'image duale $I_3$ respectivement selon la première distance $d_1$ et la deuxième distance $d_2$ sont désignées selon les notations $I_{3,z=-d1}$ et $I_{3,z=-d2}$. Elles correspondent respectivement, au bruit de reconstruction près, à une image $I_1$ représentative du premier objet 10 placé selon la position 10.1, ainsi qu'une image $I_2$ représentative du deuxième objet 10', placé selon la position 10.2, avec :

$$I_1 \approx I_{3,z=-d1} = I_3 * h_{z=-d_1}$$

$$I_2 \approx I_{3,z=-d2} = I_3 * h_{z=-d_2}$$

L'opérateur de propagation utilisé est celui décrit dans l'exemple précédent. La notation $h_{z=-d_1}$ désigne l'opérateur h correspondant à une distance de propagation z = $-d_1$. On a mis en oeuvre le dispositif représenté sur la figure 2D en plaçant :

- à la première position 10.1, une mire, dite mire de phase, comportant des trous circulaires gravés dans une lame de verre, chaque trou ayant un diamètre micrométrique (7 $\mu$m), définissant un maillage régulier de maille carrée, chaque trou étant placé au sommet d'un carré de 105 $\mu$m de coté. Cette mire de phase correspond au premier objet 10.
- à la deuxième position 10.2, la mire graduée décrite dans l'exemple précédent et présentée sur la figure 2C. Cette mire graduée correspond au deuxième objet 10'.

Comme dans le précédent exemple, les première et deuxième positions sont placées respectivement à une distance $d_1$ = 26.2 mm et $d_2$ = 15.3mm du capteur d'image.

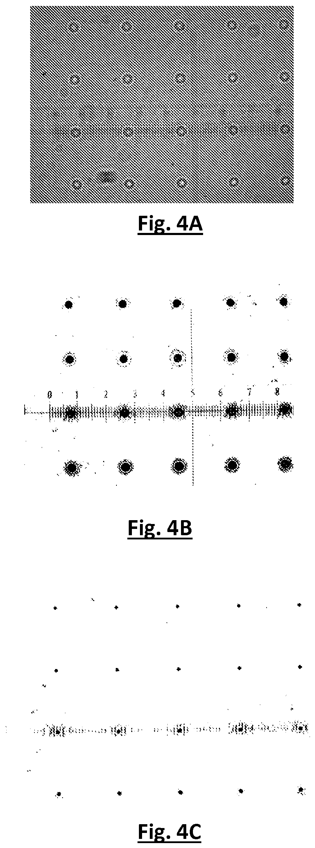

La figure 4A représente une image duale $I_3$ obtenue sur le détecteur. Comme précédemment indiqué, cette image duale comprend une première contribution $I_{3-1}$ due au premier objet 10 placé à la première position 10.1 (en l'occurrence la mire de phase), et une deuxième contribution $I_{3-2}$ due au deuxième objet 10' placé à la deuxième position 10.2, en l'occurrence la mire graduée. Cette image duale peut faire l'objet d'une reconstruction à la distance $d_1$, et d'une reconstruction à la distance $d_2$, par une convolution avec l'opérateur de propagation précédemment décrit. Cela permet d'établir une première image $I_1$ du premier objet et une deuxième image $I_2$ du deuxième objet. Les figures 4B et 4C représentent respectivement les images $I_1$ et $I_2$. Cela démontre la possibilité d'obtenir, à partir de l'image duale formée sur le détecteur, des images exploitables des objets placés simultanément selon les deux positions 10.1 et 10.2 du dispositif, ces objets étant observés selon des modalités d'imagerie différentes.

Cependant, la qualité des images de chaque objet peut être améliorée en mettant en oeuvre un autre procédé de reconstruction, appliqué à l'image duale $I_3$. L'image duale fait l'objet d'une pluralité de reconstructions, selon une plage de distance $d_r$ comprenant à la fois la première distance $d_1$ et la deuxième distance $d_2$. Ainsi, $d_1 \leq d_r \leq d_2$. On obtient une pile d'images reconstruites $I_z$ selon différents plans de reconstructions $P_z$ parallèles au plan de détection $P_{20}$, chaque image reconstruite $I_z$ étant telle que :

$I_{z=-dr} = I_3 * h_{z=-dr}$ avec $z_{min} \leq -d_1$ et $z_{max} \geq -d_2$, $z_{min}$ et $z_{max}$ désignant les bornes selon lesquelles la reconstruction est réalisée.

Pour tout ou partie des pixels $I_2 (x, y)$ de chaque image $I_z$ reconstruite selon la distance de reconstruction z, on détermine un coefficient, dit coefficient de Tamura $C_z(x, y)$, tel que

$$C_z(x,y) = \left[ \frac{\left( \frac{1}{n^2-1} \sum_{i=x-\frac{n-1}{2}}^{i=x+\frac{n-1}{2}} \sum_{j=y-\frac{n-1}{2}}^{j=y+\frac{n-1}{2}} \left( I_z(i,j) - \overline{I}_z(x,y) \right)^2 \right)^{\frac{1}{2}}}{\overline{I}_z(x,y)} \right]^{\frac{1}{2}}$$

où :

-   $n$, est un entier impair, le coefficient de Tamura relatif à un pixel $(x, y)$ étant déterminé en fonction d'un groupe de $n$, pixels $(i,j)$ de l'image $I_z$ situés dans une région d'intérêt centrée sur le pixel $(x, y)$ et s'étendant de $n$, pixels selon l'axe X et de $n$, pixels selon l'axe Y, les axes X et Y étant perpendiculaire à l'axe de propagation Z, de telle sorte que l'image reconstruite $I_z$ s'étend selon un plan parallèle aux axes X et Y ; $n$, est par exemple égal à 7, et est usuellement compris entre 3 et 15.
-   $\overline{I}_z(x, y)$ représente une moyenne de l'image $I_z$ dans ladite zone d'intérêt centrée sur le pixel $(x, y)$, de telle sorte que

$$\overline{I}_z(x,y) = \frac{1}{n^2} \sum_{i=x-\frac{n-1}{2}}^{i=x+\frac{n-1}{2}} \sum_{j=y-\frac{n-1}{2}}^{j=y+\frac{n-1}{2}} I_z(i,j)$$

Pour déterminer un coefficient de Tamura en bordure d'image, on prolonge l'image reconstruite $I_z$, au-delà de chacune de ces bordures, par des pixels virtuels dont la valeur est fixée à la valeur moyenne des pixels de cette image.

Sur chaque image reconstruite $I_z$, chaque pixel $(x, y)$ dont le coefficient de Tamura $C_z(x, y)$ dépasse une valeur seuil $s_z$ est considéré comme significatif et est affecté d'une valeur d'intensité prédéterminée $i_z$, dépendant de la coordonnée z du plan $P_z$ selon lequel s'étend l'image reconstruite $I_z$. Chaque pixel $(x, y)$ associé à un coefficient de Tamura $C_z(x, y)$ inférieur à la valeur seuil $s_z$ est affecté d'une valeur d'intensité nulle. Autrement dit, chaque image reconstruite $I_z$ est binarisée, pour former une image reconstruite binarisée notée $i_z$ : les pixels significatifs sont affectés de la valeur d'intensité $i_z$, dépendant de la distance de reconstruction z, tandis que les autres pixels sont ramenés à une intensité nulle. La valeur seuil $s_z$ considère pour chaque image reconstruite $I_z$ peut être prédéterminée, ou être déterminée en fonction de la distribution des coefficients de Tamura $C_z(x, y)$ dans l'image $I_z$ : il peut par exemple s'agir de la moyenne ou de la médiane ou d'un autre fractile.

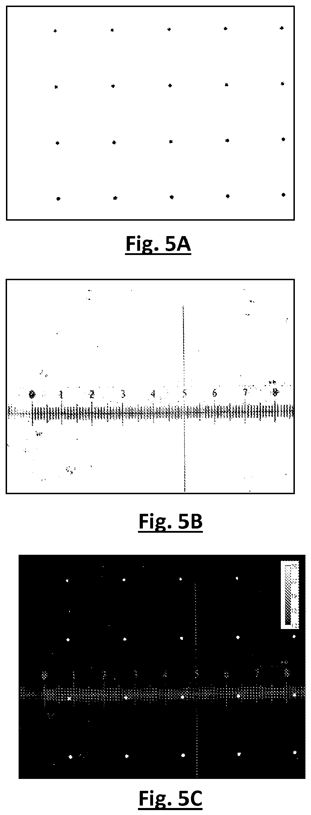

On peut alors représenter les images binarisées reconstruites $i_z$ dont les distances de reconstruction correspondent respectivement à la première position 10.1 (c'est-à-dire $z = -d_1$) et à la deuxième position 10.2 (c'est-à-dire $z = -d_2$). On obtient alors les images représentées respectivement sur les figures 5A et 5B. La figure 5A représente l'image binarisée $i_z$ avec $z = -d_1$, correspondant à une première image $I_1$ du premier objet 10. La figure 5B représente l'image binarisée $i_z$ avec $z = -d_2$, correspondant à une deuxième image $I_2$ du deuxième objet 10'.

On peut également former une image globale rassemblant l'ensemble des valeurs des pixels $i_z(x, y)$ significatifs de la pile d'images reconstruites binarisées, avec z compris entre $z_{min}$ et $z_{max}$. L'intensité $i_z$ de chaque pixel significatif dépendant de la distance de reconstruction z, il est possible d'obtenir, sur une seule image, une représentation des deux objets observés. La figure 5C représente un tel exemple, l'intensité $i_z$ de chaque pixel significatif étant d'autant plus élevée que la valeur absolue de la coordonnée z est importante : plus un élément d'un objet est éloigné du plan de détection, plus il apparaît clair sur l'image globale. On observe la mire de phase, localisée dans la première position ($z = -d_1$), simultanément à la mire graduée localisée selon la deuxième position ($z = -d_2$). Sur cette image globale, les deux objets 10 et 10' apparaissent simultanément, et sont représentés selon des niveaux d'intensité différents. L'échelle des niveaux de gris de la figure 5C permet d'effectuer la correspondance entre la distance de reconstruction et le niveau d'intensité d'un pixel. Les pixels correspondant à la mire graduée sont représentés en gris, ce qui correspond à la distance $d_2$ de 15 mm, tandis que les pixels correspondant à la mire de phase sont représentés en blanc, ce qui correspond à la distance $d_1$ de 26 mm.

Ainsi, selon ce mode de réalisation, à partir d'une image duale $I_3$, on peut :

- appliquer un algorithme de propagation numérique, de façon à obtenir une image reconstruite $I_{3,z=-d1}$, $I_{3,z=-d2}$ dans des plans de reconstructions correspondant respectivement à chaque position 10.1 et 10.2 ;
- sélectionner, sur chaque image reconstruite, des pixels dits significatifs, la sélection étant réalisée en utilisant l'intensité de l'image reconstruite auxdits pixels ;
- représenter chaque image reconstruite en ne considérant que les pixels ainsi sélectionnés.

La sélection peut se faire sur la base d'un indicateur, associé à chaque pixel $I_{3,z=-d1}(x, y) \cdot I_{3,z=-d2}(x,y)$, cet indicateur représentant une dispersion de l'intensité des pixels dans une zone d'intérêt centrée autour dudit pixel. Cet indicateur peut être normalisé par une valeur moyenne de l'intensité de l'image $I_z$ dans ladite zone d'intérêt. Cet indicateur peut être un critère de Tamura $C_z(x, y)$, tel que précédemment explicité. Précisons que le recours à un tel indicateur, appliqué à la reconstruction holographique, a été décrit dans la publication Pitkäako Tomi, «Partially cohérent digital in-line holographic microscopy in characterization of a microscopie target », Applied Optics, Vol. 53, N° 15, 20 May 2014.

La sélection peut également être réalisée sur la base d'un seuillage de l'intensité de chaque pixel de l'image reconstruite $I_z$, en fonction d'un seuil d'intensité $s_z$ prédéterminé.

Ce mode de réalisation peut également comporter une étape selon laquelle chaque pixel représentatif est affecté d'une valeur d'intensité $i_z$ dépendant de la distance de reconstruction z. Dans ce cas, on peut constituer une image globale comportant l'ensemble des pixels représentatifs de l'ensemble des images reconstruites, sur laquelle l'intensité des pixels indique la distance entre l'objet représenté par ledit pixel et le capteur d'image.

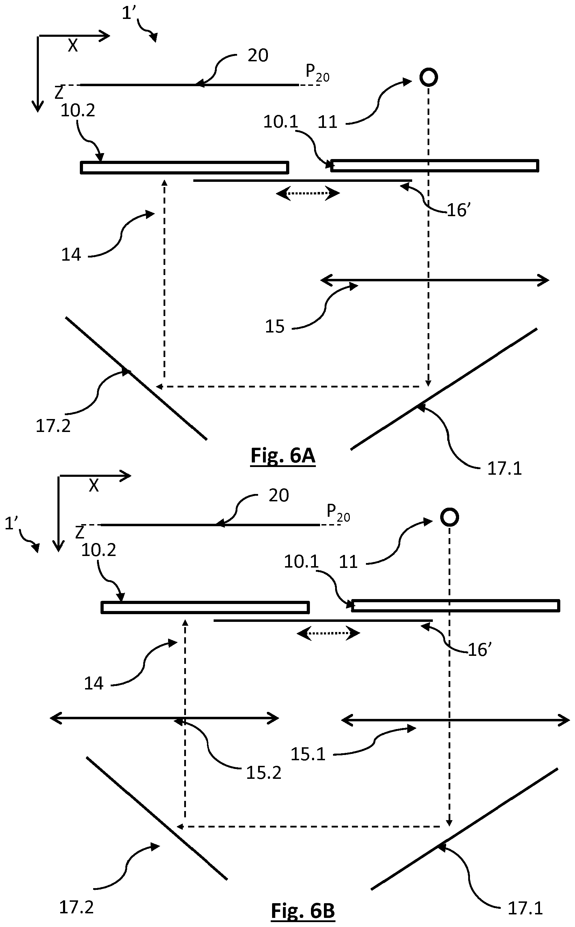

L'obtention d'une image duale et la formation de deux images respectivement représentatives du premier objet et du deuxième objet n'est pas liée au dispositif représenté sur la figure 2D. Elle peut s'appliquer au dispositif représenté sur les figures 6A à 6C décrits ci-après, ou aux dispositifs représentés sur les figures 1A, 1B et 1E.

La figure 6A représente un autre mode de réalisation, dans lequel un dispositif 1' comporte deux miroirs 17.1 et 17.2, chaque miroir étant apte à réfléchir une onde lumineuse qui lui est incidente selon un angle de 90°. Ces miroirs sont disposés de façon à former un ensemble réfléchissant l'onde lumineuse émise 12 par la source de lumière 11 selon un axe parallèle à l'axe d'émission Z. Ainsi, l'onde lumineuse suit un trajet optique linéaire jusqu'au premier miroir 17.1, où elle est déviée orthogonalement selon un sens de rotation, puis elle se propage jusqu'au deuxième miroir 17.2, où elle est déviée orthogonalement selon le même sens de rotation. Elle se propage alors, parallèlement à l'axe d'émission Z, mais dans un sens opposé à ce dernier, jusqu'au capteur d'image 20. Les premières et deuxièmes positions 10.1 et 10.2 s'étendent respectivement entre la source de lumière et le premier miroir 17.1, et entre le deuxième miroir 17.2 et le capteur d'image 20. Les miroirs 17.1 et 17.2 réfléchissent tout ou partie d'une onde lumineuse se propageant depuis la première position vers la deuxième position. La propagation de l'onde lumineuse de la source de lumière jusqu'au capteur suit alors un trajet optique 14 non rectiligne. Le système optique 15 est disposé, selon ledit trajet optique, entre la première et la deuxième position.

La figure 6B est un exemple montrant un système optique 15 comportant l'objectif 15.1, tel que précédemment décrit, disposé entre la première position 10.1 et le premier miroir 17.1, tandis que la lentille de tube 15.2 est disposée entre le deuxième miroir 17.2 et la deuxième position 10.2.

De même que dans les exemples précédemment décrits, le dispositif 1' permet d'observer, selon deux modalités d'imagerie différentes, un objet placé alternativement selon la première ou la deuxième position. Il permet également d'observer simultanément un objet, dit premier objet, placé selon la première position 10.1, et un objet auxiliaire, dit deuxième objet, placé selon la deuxième position 10.2.

Selon une variante, représentée sur les figures 6A et 6B, le support 16 comporte une partie mobile 16', permettant un déplacement de l'objet 10 entre la première position 10.1 et la deuxième position 10.2. De préférence, la distance entre la première position 10.1 et le premier miroir 17.1 est égale à la distance entre la deuxième position 10.2 et le deuxième miroir 17.2. De ce fait, le déplacement entre la première position 10.1 et la deuxième position 10.2 est ramené à une simple translation selon un plan orthogonal à l'axe d'émission Z. Cela permet un déplacement aisé d'un objet entre les deux positions. Ainsi, le support peut comporter une platine de translation assurant la translation de l'objet entre les deux positions 10.1 et 10.2.

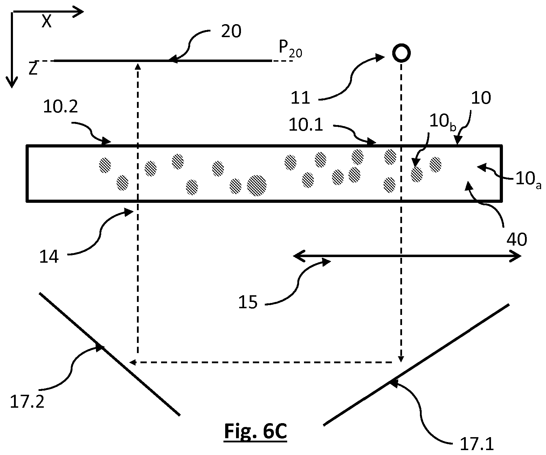

La figure 6C représente un exemple de mise en oeuvre de l'invention, dans lequel un canal fluidique 40 s'étend transversalement au trajet optique 14, et occupe à la fois la première position 10.1 et la deuxième position 10.2. Le dispositif 1' permet d'observer une première partie du canal, occupant la première position 10.1, et faisant office de premier objet, et une deuxième partie du canal, occupant la deuxième position 10.2, et faisant office de deuxième objet. Le canal fluidique 40 comporte des particules $10_b$ en suspension entraînées par un fluide $10_a$. L'observation de ladite première partie, à travers le système optique 15, permet une détection, et éventuellement un comptage de particules de faible taille, du fait du grandissement important conféré par le système optique 15. L'observation de ladite deuxième partie, selon la modalité d'imagerie sans lentille, permet une détection, et éventuellement un comptage, de particules de taille plus importantes, selon un champ d'observation plus important.

L'invention pourra être mise en oeuvre dans le domaine de l'observation d'échantillons biologiques, ou d'échantillons prélevés dans de domaine de l'agroalimentaire ou d'autres domaines industriels.

## Revendications

1. Dispositif d'observation (1, 1') d'un objet (10), comportant :

   - une source de lumière (11) et un capteur d'image (20), ladite source de lumière étant apte à émettre une onde lumineuse (12), dite onde d'émission, selon un axe d'émission (Z), de telle sorte que l'onde lumineuse se propage, selon un trajet optique (14), jusqu'au capteur d'image (20) à travers l'objet (10) ;
   - un système optique (15) disposé, selon letrajet optique (14), entre la source de lumière (11) et le capteur d'image (20) ;

   **caractérisé en ce que** le dispositif comporte également :

   - un support (16), apte à maintenir l'objet, définissant une première position (10.1) et une deuxième position (10.2), chaque position étant apte à recevoir l'objet, le support étant configuré de telle sorte que,

     ▪ la première position (10.1) est interposée, selon le trajet optique (14), entre la source de lumière (11) et le système optique (15), ce dernier étant alors configuré pour conjuguer le capteur d'image (20) à la première position ;
     ▪ la deuxième position (10.2) est interposée, selon le trajet optique (14), entre le système optique (15) et le capteur d'image (20), de telle sorte qu'il n'y ait aucune optique de grandissement entre la deuxième position et le capteur d'image.

2. Dispositif selon la revendication 1, dans lequel le trajet optique (14) s'étend parallèlement à l'axe d'émission (Z), de telle sorte que la source de lumière (11), le système optique (15) et le capteur d'image (20) sont alignés selon l'axe d'émission (Z), le support étant configuré de telle sorte que la première position (10.1) et la deuxième position (10.2) sont alignées selon l'axe d'émission (Z).

3. Dispositif selon la revendication 2, dans lequel le support (16) est mobile en translation selon une direction perpendiculaire (X,Y) à l'axe d'émission (Z).

4. Dispositif selon la revendication 1, dans lequel le dispositif comporte un premier miroir (17.1) disposé, le long du trajet optique (14), entre la source de lumière (11) et le capteur d'image (20), le premier miroir s'étendant entre les première et deuxième positions (10.1, 10.2) et étant configuré pour réfléchir une onde lumineuse se propageant depuis la première position, vers la deuxième position.

5. Dispositif selon la revendication 4, comportant un deuxième miroir (17.2), disposé entre la première position (10.1) et la deuxième position (10.2), l'ensemble formé par les premier et deuxième miroirs étant configuré pour réfléchir une onde lumineuse se propageant depuis la première position selon un axe parallèle à l'axe d'émission (Z), les première et deuxième positions (10.1, 10.2) étant décalées selon un axe perpendiculaire (X) à l'axe d'émission (Z).

6. Dispositif selon la revendication 5, dans lequel les première et deuxième positions (10.1, 10.2) sont alignées selon un axe (X), dit axe de décalage, perpendiculaire à l'axe d'émission (Z).

7. Dispositif selon l'une quelconque des revendications précédentes, dans lequel le support (16) comporte un mécanisme de déplacement (16') apte à déplacer l'objet (10) entre les première et deuxième positions (10.1, 10.2).

8. Dispositif selon la revendication 6, dans lequel le support (16) comporte un mécanisme de déplacement (16') apte à déplacer l'objet (10) entre les première et deuxième positions (10.1, 10.2), et dans lequel le mécanisme de déplacement (16') est apte à translater l'objet entre les première et deuxième positions (10.1, 10.2), selon l'axe de décalage (X).

9. Procédé d'observation d'un objet (10) à l'aide d'un dispositif (1,1') selon l'une quelconque des revendications précédentes, dans lequel la source de lumière (11) émet l'onde d'émission (12) selon une longueur d'onde ($\lambda$), l'objet étant transparent ou translucide à ladite longueur d'onde, le procédé comportant :

   a) le positionnement de l'objet selon la première position (10.1), et obtention d'une première image ($I_1$) de l'objet à l'aide du capteur d'image (20), l'objet étant conjugué au capteur d'image (20) par le système optique (15), la première image étant formée selon une première modalité dite d'imagerie conventionnelle ;
   et/ou :
   b) le positionnement de l'objet selon la deuxième position (10.2), et obtention d'une deuxième image ($I_2$) de l'objet à l'aide du capteur d'image (20), selon une deuxième modalité dite d'imagerie sans lentille.

10. Procédé d'observation d'un objet selon la revendication 9, dans lequel les étapes a) et b) sont réalisées successivement, et dans lequel :

   - la première image ($I_1$) définit un premier champ d'observation de l'objet ;
   - la deuxième image ($I_2$) définit un deuxième champ d'observation de l'objet ;

   le deuxième champ d'observation étant plus large que le premier champ d'observation.

11. Procédé d'observation d'un objet selon la revendication 10, comportant, suite à l'étape b), une étape b') de reconstruction numérique comprenant l'application, à la deuxième image ($I_2$), d'un opérateur de propagation ($h(x,y, z)$), prenant en compte une distance ($d_2$) entre la deuxième position et le capteur d'image, de façon à obtenir une image ($I_{2z=-d2}$) dite reconstruite de l'objet placé selon la deuxième position.

12. Procédé d'observation d'un objet selon la revendication 9, le procédé comportant :

   - ladite étape a), l'objet (10) positionné selon la première position (10.1) formant un premier objet ;
   - une étape c), dans laquelle on dispose un deuxième objet (10') selon la deuxième position (10.2) ;
   - obtention, par le capteur d'image (20), d'une image, dite image duale, représentant simultanément le premier objet (10) et le deuxième objet (10').

13. Procédé d'observation d'un objet selon la revendication 12, comportant une étape d) de reconstruction numérique comprenant l'application, à l'image duale ($I_3$), d'un opérateur de propagation, de façon à obtenir une image duale reconstruite :

   - dans un plan ($P_{10-1}$) s'étendant selon la première position (10.1), auquel cas l'image duale ($I_{3,z=-d1}$) ainsi reconstruite correspond à une image ($I_1$) du premier objet (10) ; et/ou
   - dans un plan ($P_{10-2}$) s'étendant selon la deuxième position (10.2), auquel cas l'image duale ($I_{3,z=-d2}$) ainsi reconstruite correspond à une image ($I_2$) du deuxième objet (10').

14. Procédé d'observation d'un objet selon la revendication 13, comportant une étape e) de sélection de pixels représentatifs dans chaque image reconstruite, en fonction de leur intensité, de façon à former une image de l'objet à partir des pixels ainsi sélectionnés.

15. Procédé d'observation d'un objet selon la revendication 14, dans lequel dans l'étape e), la sélection comporte les sous-étapes suivantes :

   i) calcul, pour chaque pixel de l'image reconstruite ($I_{3,z=-d1}$, $I_{3,z=-d2}$), d'un indicateur ($(C_2(x,y)$) représentant une dispersion de l'intensité de pixels adjacents autour dudit pixel ;
   ii) comparaison de l'indicateur calculé pour chaque pixel à un seuil ($s_z$) ;
   iii) sélection des pixels représentatifs sur la base de la comparaison réalisée à la sous-étape ii).

16. Procédé d'observation d'un objet selon la revendication 9, dans lequel l'objet (10) occupe à la fois la première position (10.1) et la deuxième position (10.2), le procédé comportant :

- l'obtention d'une première image ($I_1$) définissant un premier champ d'observation de l'objet ;
- l'obtention d'une deuxième image ($I_2$) définissant un deuxième champ d'observation de l'objet ;

le deuxième champ d'observation étant plus large que le premier champ d'observation.

**Patentansprüche**

1. Vorrichtung zur Beobachtung (1, 1') eines Objekts (10), die Folgendes umfasst:

   - eine Lichtquelle (11) und einen Bildsensor (20), wobei die Lichtquelle dazu fähig ist, eine Lichtwelle (12), als Emissionswelle bezeichnet, gemäß einer Emissionsachse (Z) zu emittieren, sodass sich die Lichtwelle gemäß einem Strahlengang (14) durch das Objekt (10) bis zu dem Bildsensor (20) ausbreitet;
   - ein optisches System (15), das gemäß dem Strahlengang (14) zwischen der Lichtquelle (11) und dem Bildsensor (20) angeordnet ist;

   **dadurch gekennzeichnet, dass** die Vorrichtung ferner Folgendes umfasst:

   - einen Träger (16), der dazu fähig ist, das Objekt zu halten, und der eine erste Position (10.1) und eine zweite Position (10.2) definiert, wobei jede Position dazu fähig ist, das Objekt aufzunehmen, wobei der Träger so konfiguriert ist, dass

     • sich die erste Position (10.1) gemäß dem Strahlengang (14) zwischen der Lichtquelle (11) und dem optischen System (15) befindet, wobei letzteres in diesem Fall dazu konfiguriert ist, den Bildsensor (20) mit der ersten Position zu koppeln;
     • sich die zweite Position (10.2) gemäß dem Strahlengang (14) zwischen dem optischen System (15) und dem Bildsensor (20) befindet, sodass zwischen der zweiten Position und dem Bildsensor keine Vergrößerungsoptik vorhanden ist.

2. Vorrichtung nach Anspruch 1, wobei sich der Strahlengang (14) parallel zu der Emissionsachse (Z) erstreckt, sodass die Lichtquelle (11), das optische System (15) und der Bildsensor (20) gemäß der Emissionsachse (Z) ausgerichtet sind, wobei der Träger so konfiguriert ist, dass die erste Position (10.1) und die zweite Position (10.2) gemäß der Emissionsachse (Z) ausgerichtet sind.

3. Vorrichtung nach Anspruch 2, wobei der Träger (16) gemäß einer zu der Emissionsachse (Z) senkrechten Richtung (X, Y) translatorisch bewegbar ist.

4. Vorrichtung nach Anspruch 1, wobei die Vorrichtung einen ersten Spiegel (17.1), der entlang des Strahlengangs (14) zwischen der Lichtquelle (11) und dem Bildsensor (20) angeordnet ist, umfasst, wobei sich der erste Spiegel zwischen der ersten und der zweiten Position (10.1, 10.2) erstreckt und dazu konfiguriert ist, eine Lichtwelle zu reflektieren, die sich von der ersten Position zu der zweiten Position ausbreitet.

5. Vorrichtung nach Anspruch 4, die einen zweiten Spiegel (17.2), der zwischen der ersten Position (10.1) und der zweiten Position (10.2) angeordnet ist, umfasst, wobei die Einheit, die durch den ersten und den zweiten Spiegel gebildet wird, dazu konfiguriert ist, eine Lichtwelle zu reflektieren, die sich gemäß einer zu der Emissionsachse (Z) parallelen Achse von der ersten Position aus ausbreitet, wobei die erste und die zweite Position (10.1, 10.2) gemäß einer zu der Emissionsachse (Z) senkrechten Achse (X) versetzt sind.

6. Vorrichtung nach Anspruch 5, wobei die erste und die zweite Position (10.1, 10.2) gemäß einer zu der Emissionsachse (Z) senkrechten Achse (X), als Versatzachse bezeichnet, ausgerichtet sind.

7. Vorrichtung nach einem beliebigen der vorhergehenden Ansprüche, wobei der Träger (16) einen Bewegungsmechanismus (16') umfasst, der dazu fähig ist, das Objekt (10) zwischen der ersten und der zweiten Position (10.1, 10.2) zu bewegen.

8. Vorrichtung nach Anspruch 6, wobei der Träger (16) einen Bewegungsmechanismus (16') umfasst, der dazu fähig ist, das Objekt (10) zwischen der ersten und der zweiten Position (10.1, 10.2) zu bewegen, und wobei der Bewegungsmechanismus (16') dazu fähig ist, das Objekt gemäß der Versatzachse (X) zwischen der ersten und der zweiten Position (10.1, 10.2) zu verschieben.

9. Verfahren zur Beobachtung eines Objekts (10) mit Hilfe einer Vorrichtung (1, 1') nach einem beliebigen der vorhergehenden Ansprüche, wobei die Lichtquelle (11) die Emissionswelle (12) gemäß einer Wellenlänge ($\lambda$) emittiert, wobei das Objekt für die Wellenlänge transparent oder transluzent ist, wobei das Verfahren Folgendes umfasst:

a) Positionieren des Objekts gemäß der ersten Position (10.1) und Erhalten eines ersten Bildes ($I_1$) des Objekts mit Hilfe des Bildsensors (20), wobei das Objekt durch das optische System (15) mit dem Bildsensor (20) gekoppelt ist, wobei das erste Bild gemäß einer ersten Modalität, die als konventionelle Bildgebung bezeichnet wird, gebildet wird;
und/oder:
b) Positionieren des Objekts gemäß der zweiten Position (10.2) und Erhalten eines zweiten Bildes ($I_2$) des Objekts mit Hilfe des Bildsensors (20) gemäß einer zweiten Modalität, die als linsenfreie Bildgebung bezeichnet wird.

10. Verfahren zur Beobachtung eines Objekts nach Anspruch 9, wobei die Schritte a) und b) nacheinander durchgeführt werden und wobei:

- das erste Bild ($I_1$) ein erstes Beobachtungsfeld des Objekts definiert;
- das zweite Bild ($I_2$) ein zweites Beobachtungsfeld des Objekts definiert;

wobei das zweite Beobachtungsfeld breiter als das erste Beobachtungsfeld ist.

11. Verfahren zur Beobachtung eines Objekts nach Anspruch 10, das im Anschluss an den Schritt b) einen Schritt b') der digitalen Rekonstruktion umfasst, welcher unter Berücksichtigung eines Abstands ($d_2$) zwischen der zweiten Position und dem Bildsensor das Anwenden eines Ausbreitungsoperators ($h(x, y, z)$) auf das zweite Bild ($I_2$) beinhaltet, um ein sogenanntes rekonstruiertes Bild ($I_{2z=-d2}$) des Objekts, das gemäß der zweiten Position platziert ist, zu erhalten.

12. Verfahren zur Beobachtung eines Objekts nach Anspruch 9, wobei das Verfahren Folgendes umfasst:

- den Schritt a), wobei das Objekt (10), das gemäß der ersten Position (10.1) positioniert ist, ein erstes Objekt bildet;
- einen Schritt c), bei dem ein zweites Objekt (10') gemäß der zweiten Position (10.2) angeordnet wird;
- Erhalten, durch den Bildsensor (20), eines Bildes, das als duales Bild bezeichnet wird und das gleichzeitig das erste Objekt (10) und das zweite Objekt (10') darstellt.

13. Verfahren zur Beobachtung eines Objekts nach Anspruch 12, das einen Schritt d) der digitalen Rekonstruktion umfasst, welcher das Anwenden eines Ausbreitungsoperators auf das duale Bild ($I_3$) umfasst, um ein rekonstruiertes duales Bild:

- in einer Ebene ($P_{10-1}$), die sich gemäß der ersten Position (10.1) erstreckt, zu erhalten, in welchem Fall das so rekonstruierte duale Bild ($I_{3,z=-d1}$) einem Bild ($I_1$) des ersten Objekts (10) entspricht; und/oder
- in einer Ebene ($P_{10-2}$), die sich gemäß der zweiten Position (10.2) erstreckt, zu erhalten, in welchem Fall das so rekonstruierte duale Bild ($I_{3,z=-d2}$) einem Bild ($I_2$) des zweiten Objekts (10') entspricht.

14. Verfahren zur Beobachtung eines Objekts nach Anspruch 13, das einen Schritt e) des Auswählens von repräsentativen Pixeln in jedem rekonstruierten Bild in Abhängigkeit von ihrer Intensität umfasst, um ein Bild des Objekts anhand der derart ausgewählten Pixel zu bilden.

15. Verfahren zur Beobachtung eines Objekts nach Anspruch 14, wobei in Schritt e) das Auswählen die folgenden Unterschritte umfasst:

i) Berechnen, für jedes Pixel des rekonstruierten Bildes ($I_{3,z=-d1}$, $I_{3,z=-d2}$), eines Indikators (($C_z(x,y)$), der eine Streuung der Intensität von an das Pixel angrenzenden Pixeln darstellt;
ii) Vergleichen des für jedes Pixel berechneten Indikators mit einem Schwellenwert ($s_z$);
iii) Auswählen der repräsentativen Pixel auf Basis des in Unterschritt ii) durchgeführten Vergleichs.

**16.** Verfahren zur Beobachtung eines Objekts nach Anspruch 9, wobei das Objekt (10) gleichzeitig die erste Position (10.1) und die zweite Position (10.2) einnimmt, wobei das Verfahren Folgendes umfasst:

- Erhalten eines ersten Bildes ($I_1$), das ein erstes Beobachtungsfeld des Objekts definiert;
- Erhalten eines zweiten Bildes ($I_2$), das ein zweites Beobachtungsfeld des Objekts definiert;

wobei das zweite Beobachtungsfeld breiter als das erste Beobachtungsfeld ist.

**Claims**

**1.** Device (1, 1') for observing an object (10), including:

- a light source (11) and an image sensor (20), said light source being able to emit a light wave (12), called the emission wave, along an emission axis (Z), in such a way that the light wave propagates, along an optical path (14), to the image sensor (20) through the object (10);
- an optical system (15) that is placed, on the optical path (14), between the light source (11) and the image sensor (20);

**characterized in that** the device also includes:

- a holder (16) that is able to hold the object, and that defines a first position (10.1) and a second position (10.2), each position being able to receive the object, the holder being configured such that

■ the first position (10.1) is interposed, on the optical path (14), between the light source (11) and the optical system (15), the latter then being configured to conjugate the image sensor (20) to the first position;
■ the second position (10.2) is interposed, on the optical path (14), between the optical system (15) and the image sensor (20), in such a way that there are no magnifying optics between the second position and the image sensor.

**2.** Device according to Claim 1, wherein the optical path (14) lies parallel to the emission axis (Z) in such a way that the light source (11), the optical system (15) and the image sensor (20) are aligned along the emission axis (Z), the holder being configured in such a way that the first position (10.1) and the second position (10.2) are aligned along the emission axis (Z).

**3.** Device according to Claim 2, wherein the holder (16) is translationally movable in a direction (X, Y) that is perpendicular to the emission axis (Z).

**4.** Device according to Claim 1, wherein the device includes a first mirror (17.1) that is placed, along the optical path (14), between the light source (11) and the image sensor (20), the first mirror lying between the first and second positions (10.1, 10.2) and being configured to reflect a light wave propagating from the first position, to the second position.

**5.** Device according to Claim 4, including a second mirror (17.2) that is placed between the first position (10.1) and the second position (10.2), the assembly formed by the first and second mirrors being configured to reflect a light wave propagating from the first position along an axis parallel to the emission axis (Z), the first and second positions (10.1, 10.2) being offset along an axis (X) that is perpendicular to the emission axis (Z).

**6.** Device according to Claim 5, wherein the first and second positions (10.1, 10.2) are aligned along an axis (X), called the offset axis, that is perpendicular to the emission axis (Z).

**7.** Device according to any one of the preceding claims, wherein the holder (16) includes a moving mechanism (16') that is able to move the object (10) between the first and second positions (10.1, 10.2).

**8.** Device according to Claim 6, wherein the holder (16) includes a moving mechanism (16') that is able to move the object (10) between the first and second positions (10.1, 10.2), and wherein the moving mechanism (16') is able to translate the object between the first and second positions (10.1, 10.2), along the offset axis (X).

9. Method for observing an object (10) using a device (1, 1') according to any one of the preceding claims, wherein the light source (11) emits the emission wave (12) at a wavelength ($\lambda$), the object being transparent or translucent at said wavelength, the method including:

a) positioning the object in the first position (10.1), and obtaining a first image ($I_1$) of the object using the image sensor (20), the object being conjugated with the image sensor (20) by the optical system (15), the first image being formed using a first modality called the conventional imaging modality;
and/or:
b) positioning the object in the second position (10.2), and obtaining a second image ($I_2$) of the object using the image sensor (20), using a second modality called the lensless imaging modality.

10. Method for observing an object according to Claim 9, wherein steps a) and b) are carried out in succession, and wherein:

- the first image ($I_1$) defines a first field of observation of the object;
- the second image ($I_2$) defines a second field of observation of the object;

the second field of observation being larger than the first field of observation.

11. Method for observing an object according to Claim 10, including, following step b), a step b') of numerical reconstruction, which comprises applying, to the second image ($I_2$), a propagation operator ($h(x,y,z)$) that takes into account a distance ($d_2$) between the second position and the image sensor, so as to obtain an image ($I_{2z=-d2}$), called the reconstructed image, of the object placed in the second position.

12. Method for observing an object according to Claim 9, the method including:

- said step a), the object (10) positioned in the first position (10.1) forming a first object;
- a step c), in which a second object (10') is placed in the second position (10.2);
- obtaining, with the image sensor (20), an image, called the dual image, simultaneously showing the first object (10) and the second object (10').

13. Method for observing an object according to Claim 12, including a step d) of numerical reconstruction, which comprises applying, to the dual image ($I_3$), a propagation operator, so as to obtain a reconstructed dual image:

- in a plane ($P_{10-1}$) extending through the first position (10.1), in which case the dual image ($I_{3,z=-d1}$) thus reconstructed corresponds to an image ($I_1$) of the first object (10);
and/or
- in a plane ($P_{10-2}$) extending through the second position (10.2), in which case the dual image ($I_{3,z=-d2}$) thus reconstructed corresponds to an image ($I_2$) of the second object (10').

14. Method for observing an object according to Claim 13, including a step e) of selecting, depending on their intensity, representative pixels in each reconstructed image, so as to form an image of the object from the pixels thus selected.

15. Method for observing an object according to Claim 14, wherein, in step e), the selection includes the following substeps:

i) calculating, for each pixel of the reconstructed image ($I_{3,z=-d1}, I_{3,z=-d2}$), an indicator ($C_z(x,y)$) representing a dispersion of the intensity of adjacent pixels around said pixel;
ii) comparing the indicator calculated for each pixel to a threshold ($s_z$);
iii) selecting the representative pixels on the basis of the comparison made in substep ii).

16. Method for observing an object according to Claim 9, wherein the object (10) occupies both the first position (10.1) and the second position (10.2), the method including:

- obtaining a first image ($I_1$) defining a first field of observation of the object;
- obtaining a second image ($I_2$) defining a second field of observation of the object;

the second field of observation being larger than the first field of observation.

**Fig. 1A**

**Fig. 1B**

**Fig. 1C**

**Fig. 1D**

**Fig. 1E**

**Fig. 2A**

**Fig. 2B**

**Fig. 2C**

**Fig. 2D**

**Fig. 3**

**Fig. 4A**

**Fig. 4B**

**Fig. 4C**

**Fig. 5A**

**Fig. 5B**

**Fig. 5C**

**Fig. 6A**

**Fig. 6B**

**Fig. 6C**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008090330 A
- US 20120218379 A
- US 20120148141 A
- US 6219181 B

**Littérature non-brevet citée dans la description**

- **REPETTO L.** Lensless digital holographie microscope with light-emitting diode illumination. *Optics Letters,* Mai 2004
- **RYLE et al.** Digital in-line holography of biological specimens. *Proc. Of SPIE,* 2006, vol. 6311
- **MARATHAY, A.** On the usual approximation used in the Rayleigh-Sommerfeld diffraction theory. *J. Opt. Soc. Am. A,* Avril 2004, vol. 21 (4
- **PITKÄAKO TOMI.** Partially cohérent digital in-line holographic microscopy in characterization of a microscopie target. *Applied Optics,* 20 Mai 2014, vol. 53 (15